# EUROPEAN PATENT SPECIFICATION

(11) **EP 3 992 030 B1**
(45) Date of publication and mention of the grant of the patent: **25.09.2024**
(21) Application number: 20205546.3
(22) Date of filing: 03.11.2020
(51) Int. Cl.: B60P 7/12

(54) **CARGO CHOCK, KIT COMPRISING SUCH CARGO CHOCKS, CARGO SYSTEM AND METHOD OF SECURING A PIECE OF CARGO**
FRACHTKEIL, BAUSATZ MIT SOLCHEN FRACHTKEILEN, FRACHTSYSTEM UND VERFAHREN ZUR SICHERUNG EINES FRACHTSTÜCKS
CALE DE CHARGEMENT , KIT COMPRENANT LESDITES CALES DE CHARGEMENT , SYSTÈME DE CHARGEMENT ET PROCÉDÉ DE FIXATION D'UNE PIÈCE DE CHARGEMENT

(43) Date of publication of application: 04.05.2022
(73) Proprietor: Stora Enso Oyj, 00101 Helsinki (FI); Veltkamp BV, 1742 NL Schagen (NL)
(72) Inventor: Gillis, Dirk, 9940 Evergem (BE); Baeyens, Tom, 9060 Zelzate (BE); Schokker, Jan, 1132AX Volendam (NL)
(74) Representative: AWA Sweden AB

(56) References cited:
- AT-U1- 5 689
- FR-A1- 2 686 302
- US-A- 4 685 846
- US-A1- 2015 034 787

## Description

### Technical field

The present document relates to a system used for safely transporting pieces of cargo having a downwardly convex surface, in particular cylindrical cargo like paper reels. In particular, the document relates to securing cargo to a cargo bed with no need for applying fastening means through or into the cargo bed.

The document also provides a method of securing a piece of cargo having a downwardly convex surface, such as an essential cylindrical cargo.

### Background

Shipping on road is today often carried out over long distances in large trucks before reaching the final destination. Often, the cargo may be fragile and only have value when arriving to its destination completely unharmed. Especially, large cylindrical goods may be challenging to ship safely and thus, securing the cargo is an important part of succeeding in any kind of business.

Usually, during shipping cylindrical cargo such as hard paper reels, the cargo is fastened by using lashing belts combined with support means, such as chocks or wedges, preventing the cargo rolling around and becoming damaged in the cargo space.

Presently, these wedges for securing cylindrical cargo, such as paper reels and paperboard reels, are often secured to a cargo bed by means of screws, nails or other fixating means that require a specific load bed having holes, grooves or the like, for securing the cargo chocks or wedges.

By nailing or screwing the wedges to the cargo bed, as seen in the prior art, relocation of the wedges in the cargo area is not easy to perform, leading to the prior art solution being fixed and not allowing the cargo space becoming quickly adapted to different kind or differently sized cargo. By using screwing and nailing, the cargo bed may also become damaged.

As an example of an apparatus for securing of load at a load bed with other fixating means, US2014169905 utilizes a wedge comprising engaging means for fastening into a groove in cargo bed. In such an apparatus, a cavity or a groove is required in a cargo bed to engage with the supporting wedge. Lashing is also performed and fastening of the lashing is performed by attachment to the cargo bed. This solution requires a specifically formed load bed presenting longitudinal grooves having predetermined distances in between, for engaging with a clamping mechanism in cargo wedges, leading to the system being not flexible enough to allow any kind of distances between the wedges and being complex to produce and to handle.

Presently, there are no good options for securing cylindrical cargo to a cargo bed without causing damage to the cargo bed or without permanently modifying the cargo bed to comprise cavities, grooves or the like, specifically adapted for receiving and/or fastening cargo wedges (or other support means like cradles).

Additionally, cylindrical cargo, such as hard paper reels or paperboard reels, need to be secured evenly to the cargo bed, in order not to damage the cargo and at the same time, prevent rolling (lateral movement).

Cargo solutions are known from e.g. AT5689U1, US4685846A, FR2686302A1 and US2015/034787A1.

Currently, there is a need for eliminating the above drawbacks for securing sensitive cylindrical load, such as paper reels to a cargo bed.

Consequently, there is a need for a better, more adaptable and flexible solution for securing cylindrical cargo to a cargo bed, that prevents manipulation of the cargo bed and provides more flexibility and convenient securing of cylindrical cargo and at the same time being secure to handle.

### Summary

It is an object of the present disclosure, to provide an improved cargo chock, a kit, a system and a method for securing cylindrical cargo, such as hard paper reels or paperboard reels.

The invention is defined by the appended independent claims. Embodiments are set forth in the dependent claims.

According to a first aspect,
there is provided a cargo system comprising a generally flat cargo bed, at least one piece of downwardly convex cargo, at least one lashing belt sized and adapted for securing a piece of cargo and at least two pair of cargo chocks. Each of the cargo chock comprises a wedge body having a load support face, a securing face facing away from the load support face, and an elongate base support face, which extends along a longitudinal direction of the wedge body.

The securing face presents at least one lashing belt attachment device.

The cargo chock is freely arranged on the cargo bed.

The at least one piece of cargo is arranged to bear against the load support face, and the lashing belt is connected to the lashing belt attachment device, extends below the piece of cargo and is attached at an opposite side of the piece of cargo.

The cargo system further comprises at least one spacing device, preferably in the form of an anti-slip mat, arranged between the at least one piece of cargo and the cargo bed such that a gap is formed between cargo bed and the piece of cargo and that the lashing belt extends through said gap.

The wedge surface may be formed to tightly abut a piece of cargo having a concave surface. The wedge surface may therefore have slightly upwardly concave surface Thereby, form-fitting support may be provided for the cargo and the risk of damage to the cargo is minimized.

The lashing belt attachment device may comprise a rod. The lashing belt attachment device may be sized and adapted for receiving a lashing belt.

The wedge body may be adapted for securing paper rolls or reels of industrial scale sizing, for example approximately up to 4,5m in length and approximately up to 1,25 m in diameter. The weight for a reel may be approximately up to 5500 kg.

The securing face may present at least one recess, in which the lashing belt attachment device is provided.

Instead of a recess, there may be formed a protrusion extending out from the securing face. The protrusion may be sized and adapted for receiving a lashing belt.

However, the lashing belt attachment device may also be provided between a pair of tongues extending from the securing face.

The lashing belt attachment device may be formed as at least one rod, which extends substantially horizontally and perpendicular to the longitudinal direction.

The lashing belt attachment device may be formed as a rod, loop or in any other way, being sized and adapted for receiving a lashing belt.

The rod may be secured at its respective ends to the wedge body.

The chock may further comprise at least a second lashing belt attachment device and wherein the lashing belt attachment devices are spaced apart along the securing face and extend parallel with each other

The chock may also comprise more than two lashing belt attachment devices. An advantage of having more than one lashing belt attachment device comprised in the chock is that the lashing can be performed more securely.

For example, in case the lashing belt attachment device is a rod, by bringing the lashing belt around the first and a second rod, more friction is created for tensioning the lashing belt.

The lashing belt attachment devices may be spaced apart along the securing face. The lashing belt attachment devices may also extend parallelly with each other.

The wedge body may further comprise a groove formed in the elongate base support face, said groove extending along the longitudinal direction of the wedge body and being open at short sides of the elongate base support face.

The groove may extend along the elongate base support face of the chock. The groove may be opened at short sides of the elongate base surface.

An advantage of having a groove extending along the elongate base support face and being opened at short sides is that the lashing belt is allowed to run between the chock and a cargo bed without risking endangering the balance of the chock.

Hence, the groove effectively divides the elongate base support face into two base surfaces on each side of the groove.

A cargo bed may for instance be a substantially flat surface on which the cargo is to be transported, such as a cargo bed. Particular examples of cargo beds may be a cargo bed of a truck or lorry, a cargo bed of a train car or a cargo floor of a ship.

The groove may be sized to allow the lashing belt to run freely between the chock and the cargo bed.

The elongate base support face may be modified to present greater friction relative to a material from which the wedge body is manufactured and/or relative to at least one of the load support face and the securing face.

The material from which the wedge body is manufactured is defined as that material which constitutes more than 50 % by volume of the wedge body, preferably more than 75 %.

The chock may comprise an elongate base support face adapted for resting on a supporting surface, such as the vehicle floor. The elongate base support face may further comprise base surfaces. The base surfaces may be friction modified. By friction modified it is meant that the friction may preferably be higher on the bas surfaces. The friction modification leading to a higher friction may prevent the chock from slipping on the cargo bed.

By friction modifying the base support face, it is also meant that the base support face of the chock may comprise anti-slip material. The anti-slip material may be a material having a higher coefficient of friction than the chock material.

By friction modifying the base support face, it is also meant that the base support face may comprise a separate piece of anti-slip mat positioned under the chock, between the elongate base support face and the cargo bed to prevent slipping.

By friction modifying the base support face, it is also meant that the base support face may be made rough or knotted, to enable gripping engaging with or gripping the support surface.

The friction modification it is also meant that the supporting surfaces at the elongate base support face may be modified the same way as the base support face.

The chock may be made of a plurality of planar pieces of polymer, wooden, composite or metallic material, dependent on which kind of cargo is being supported. Preferably, the chock may be formed of a polymer material, such as engineering plastics, or a bio-composite material (mixture of biodegradable fibers and polymers). For example, there may be four sections or planar pieces laterally attached together. Alternatively, the chocks may be made from one or more planar pieces.

The wedge body may comprise one single wedge piece. The wedge body may comprise several wedge pieces which are fixedly connected to each other. The wedge pieces may for example be fixedly connected by means of gluing or screwing, or by other means.

The wedge body may be formed from several wedge pieces which are structured pieces that are not compact. An advantage of using structured pieces that are not compact is that weight and material can be saved. The wedge pieces or structural pieces that are not compact, may be formed as parallelly extending slices. In that case, there are air pockets formed in between the slices of material. The structure of the slices may be formed in a way, that still provides a great durability and an ability to withstand forces from cargo, when assembled together as a wedge body, when in use. The structural slices may of course, be formed of a compact material.

The chock has a length, extending along the longitudinal direction of the elongate base support face. The chock has a width perpendicular to the elongate base support face and a height perpendicular to the length and width.

The chock may have a width of 8-14 cm, preferably 9-14 cm, most preferably 10-12 cm.

The length of the chock may be 100-600% of the width, preferably 300-500%, most preferably 350-350-400%. Alternatively, length of the chock may be 20-60 cm, preferably 30-50 cm, most preferably 35-40 cm.

The chock may have a height which corresponds to 80-400% of the width, preferably 120-300%, most preferably 150-230% of the width. Alternatively, the height of the chock may be to 8-40cm, preferably 12-30 cm, most preferably 15-23 cm.

The system further comprises at least one spacing device, preferably in the form of an anti-slip mat, arranged between the piece of cargo and the cargo bed.

The spacing device has an advantage of, when in use, providing a distance between the cargo and the support surface.

The spacing device may be a spacing mat. The spacing device may comprise a mat, which may be sized and adapted to allow a lashing belt to freely move underneath cargo. Preferably, at least a pair of spacing mats are provided underneath one piece of cargo. Thereby, the lashing belt is allowed to extend and longitudinally move between the cargo bed and the elongate base support face.

The spacing device may have a thickness larger than or equal to 6 mm.

In particular, the spacing device may be compressible, but only to such extent as to always leave a gap between the cargo and the cargo bed. To this end, the spacing device may have a thickness, hardness and planar surface area that are selected so as to ensure maintenance of the gap. As another option, the spacing device may be formed from a hard substrate material, such as a metal, wood or polymer material, which may be laminated to a softer cushioning material, such as a rubber, polymer foam or gel material.

The spacing device may also be an anti-slip mat. The spacing device may also comprise a pair of anti-slip mats stacked on top of each other. The anti-slip mat has an advantage of preventing gliding between the cargo and the cargo bed.

The anti-slip mat may have a minimal coefficient of sliding friction µ=0,65.

The lashing belt may comprise chemical fibers.

The lashing belt may have a minimal lashing capacity LC=2500 daN. By providing a minimal lashing capacity, an advantage of safely securing the cargo may be achieved.

It is understood, that extending the lashing belt above the piece of cargo is not necessary, as sufficient assurance against rolling of the cargo may be provided by the cargo chocks which are tensioned together as a pair by means of the lashing belt.

An advantage of providing the system comprising a pair of chocks, a lashing belt and a cargo is that the cargo may be sufficiently secured to the cargo bed to cope with centrifugal forces emerging during transportation.

By being "freely arranged" is understood that the cargo chock is positioned freely on the cargo bed, without being secured to the cargo bed in any other way than through the friction between the cargo chock and the cargo bed. Hence, this rules out the use of grooves or pre-arranged holes with which the cargo chock may be caused to engage.

The system may comprise a wedge body, wherein the wedge body
further comprises a groove formed in the elongate base support face. Said groove may extend along the longitudinal direction of the wedge body and be open at short sides of the elongate base support face. The lashing belt may extend below the cargo chock through said groove.

The system may further comprise at least one spacing device, which is arranged between the cargo bed and the piece of cargo, such that a gap is formed between cargo bed and the piece of cargo. The lashing belt may extend through said gap.

A pair of spacing devices, preferably spacing mats may be placed underneath the cargo. For example, the spacing device may be placed underneath the cargo perpendicular to the length direction of the cargo. In particular, the spacing devices may be placed on either sides of the lashing belt, such that the lashing belt may run freely underneath the piece of cargo.

By placing the spacing device in that way, the lashing belt underneath the cargo may run freely under the cargo. Thereby, the lashes are not prevented from being tensioned by the weight of the cargo and may be tensioned at any time. The anti-slip mats may also have an advantage of preventing gliding of the cargo in its longitudinal direction.

Spacing devices have an advantage of being freely movable or freely positionable on the cargo bed.

The system may further comprise a second cargo chock arranged on
said opposite side of the piece of cargo, wherein the lashing belt is connected to a lashing belt attachment device of the second cargo chock.

An additional lashing belt may extend over the piece of cargo. The lashing belt may also extend over several pieces of cargo. The additional lashing belt may be directly secured or connected to the cargo bed. There may be several additional lashing belts provided dependent on the weight of the cargo to be secured.

The lashing belt attachment device comprised in the system may comprise an upper rod and a lower rod. The lashing belt may extend downwardly from above the piece of cargo through a first deflection by the lower rod, from an outside towards an inside of the lower rod, upwardly towards the upper rod, through a second deflection by the upper rod, from an outside towards an inside of the upper rod, downwardly towards the lower rod, through a third deflection by the lower rod, from an inside towards an outside of the lower rod, and downwardly to below the cargo chock.

The system may further comprise at least one lashing belt tensioning device. The lashing belt tensioning devices may be used for tensioning and/or securing the lashing belt. By securing the lashing belt, it is meant that the lashing belt is prevented from gliding in relation to the wedge body.

The lashing belt tensioning device may be a ratchet, or any other fastener.

In an embodiment wherein one or two pieces of cargo are comprised in a system, the system may comprise normal sized paper reels or paperboard reels. By normal sized paper reels are meant paper reels measuring approximately 4,5 m in length and 1,25 m in diameter.

In an embodiment of a system for securing cargo comprising three pieces of cargo the size and shape of the wedge(s) may correspond to cylindrical cargo to be secured. More specifically, the load support surface of the chock may be adapted to the size and convex surface of the cargo. The load support face may for example be formed concave to tightly fit the convex surface of cargo having varying size. By cargo having varying size it is meant that the length and the diameter of the cylindrical cargo may vary. For example, the diameter may be smaller than a normal sized paper reel diameter.

According to a second aspect, there is provided method of securing a piece of cargo, which is downwardly convex, on a cargo bed. The method comprises providing at least two cargo chocks, each comprising a wedge body having a load support face, a securing face facing away from the load support face, and an elongate base support face, which extends along a longitudinal direction of the wedge body. The securing face presents at least one lashing belt attachment device. The method further comprises arranging the piece of cargo on the cargo bed, arranging the cargo chock so that the load support face bears against the piece of cargo, providing a lashing belt, connecting the lashing belt to the lashing belt attachment device of a first one of the chocks, causing the lashing belt to extend below the piece of cargo, and securing the lashing belt at an opposite side of the piece of cargo from the first cargo chock to a second one of the cargo chocks.

The method may further comprise providing an additional lashing belt
to extend above the piece of cargo and securing the additional lashing belt to the cargo bed.

The wedge body may comprise a groove formed in the elongate base support face, extending along the longitudinal direction of the wedge body and open at short sides of the elongate base support face. The method may further comprise causing the lasing belt to extend below the cargo chock through said groove.

The method further comprises providing at least one spacing device, arranging the spacing device between the cargo bed and the piece of cargo, such that a gap is formed between cargo bed and the piece of cargo, and causing the lashing belt to extend through said gap.

Thereby, a gap is formed between cargo bed and the piece of cargo. An effect of that is that the lashing belt may extend through said gap.

In the method, the lashing belt attachment device may comprise an upper rod and a lower rod. The method may further comprise causing the lashing belt to extend through a first deflection by the lower rod. The lashing belt may further extend from an outside towards an inside of the lower rod and upwardly towards the upper rod. The lashing belt may further extend through a second deflection by the upper rod, from an outside towards an inside of the upper rod and downwardly towards the lower rod. Further the lashing belt may extend through a third deflection by the lower rod, from an inside towards an outside of the lower rod, and downwardly to below the cargo chock.

The method may further comprise tensioning the lashing belt. Preferably, the lashing belt is tensioned by pulling the lashing belt at
at least at one end of the lashing belt. An advantage of tensioning the lashing belt by pulling is that no further tensioning or securing means are necessary to prevent lateral movement of the cargo and the chocks. In that way the lashing belt is tensioned between the cargo chocks and below the piece of cargo, wherein the lashing belt is kept in a secured position by means of friction.

The method according may further comprise providing two or more pieces of cargo on the cargo bed and causing the lashing belt to extend below said two or more pieces of cargo.

The method may further comprise providing an auxiliary support wedge. The auxiliary support wedge may be temporarily to support the piece of cargo positioned on the cargo bed. Subsequently to said securing of the piece of cargo, the auxiliary support wedge may be removed.

### Brief Description of the Drawings

Embodiments of the present solution will now be described, by way of example, with reference to the accompanying schematic drawings in which:
Fig 1a schematically illustrates a system comprising cargo chocks placed on a cargo bed underneath cylindrical cargo, together with anti-slip mats and a lashing belt.
Figs 1b-1e schematically illustrate pieces of cargo comprised in a system for securing cargo.
Figs 2a and 2b schematically illustrate one embodiment of the cargo chock.
Figs 3a-3d schematically illustrate an embodiment of a cargo chock.

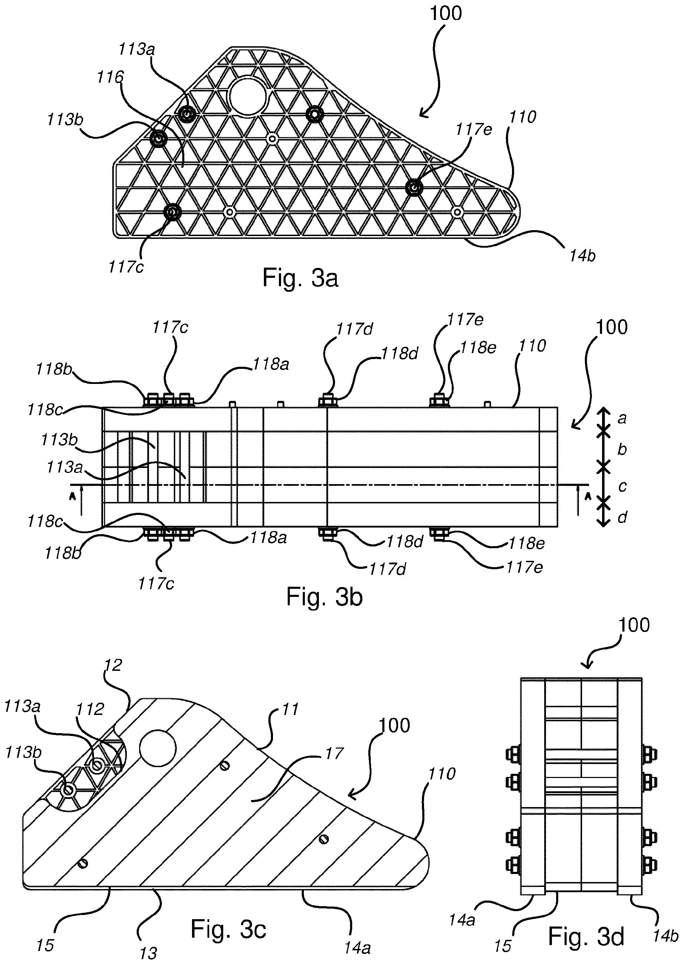

Fig 3a illustrates an embodiment of a cargo chock from a side view.
Fig 3b illustrates an embodiment of a cargo chock from a top view.
Fig 3c illustrates an embodiment of a cargo chock from a cross section view, seen from the same side as in fig 3a.
Fig 3d illustrates an embodiment of a cargo chock from a front view.

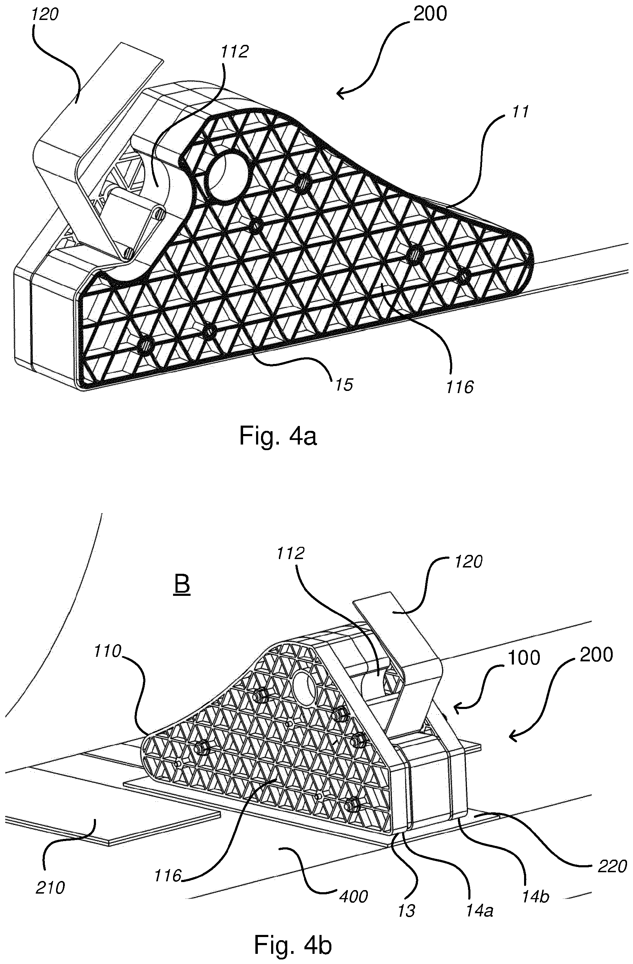

Fig 4a schematically illustrates a cross section of an embodiment of the cargo chock together with lashing belt.
Fig 4b schematically illustrates an embodiment of a cargo chock adjacent to cylindrical cargo, anti-slip mats and lashing belt.

### Description of Embodiments

In the following, the principles of the present disclosure will be illustrated using circular cylindrical pieces of cargo as an illustrative, but nonlimiting example. It is understood that the inventive concept may be applied to any cargo having a downwardly convex surface, which may, but need not, follow, e.g., a circular, oval or elliptic curve.

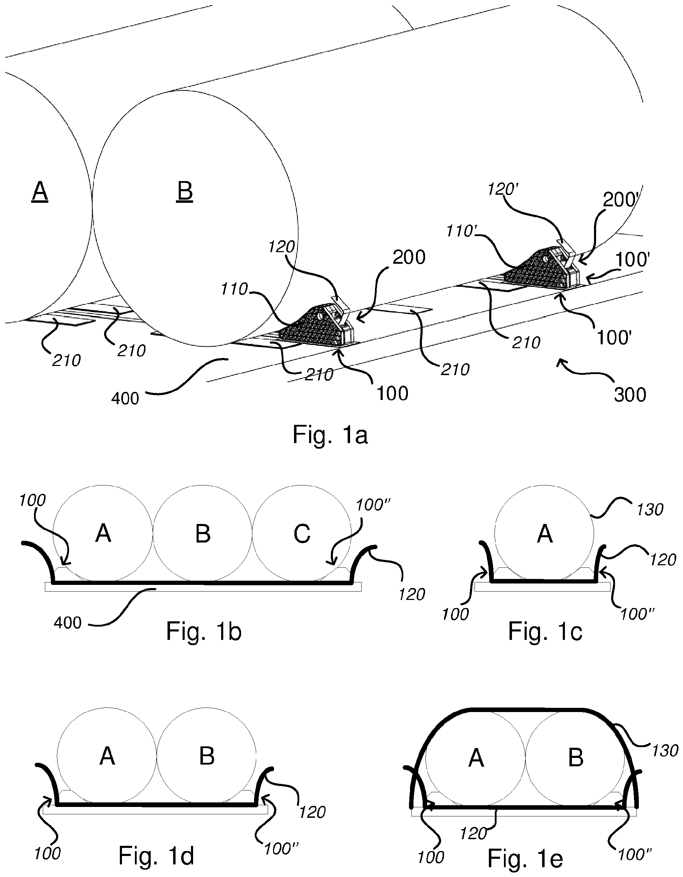

Fig 1a shows two pieces of cylindrical cargo A and B placed on a cargo bed 400. There is a kit 200, 200' provided for securing the pieces of cargo A and B, comprising chocks 100, 100' and lashing belts. In the displayed embodiment, also spacing devices 210 are provided. The chocks 100, 100' are provided with a lashing belt 120, 120' attached to each chock and then placed on one long side of a cargo bed. A pair of spacing devices 210, which may be anti-slip mats, are placed on the cargo bed 400 before placing the cargo on top of the anti-slip mats.

The spacing devices may be formed as, and placed on the cargo bed such that these allow the lashing belt 120, 120' to run freely underneath the cylindrical cargo A, B.

The pieces of cylindrical cargo A, B may be placed on top of the rolled-out lashing belt 120, 120', such that the cargo A abuts the chocks 100, 100'. On the other side of the cargo bed, there may be corresponding chocks (not illustrated) placed out to support the cargo. The chocks will be more closely described in following figures.

One end of the lashing belt 120, 120' runs through a part of a first chock 100, 100', underneath said chock 100, 100', underneath the cargo A, B and underneath and through a part of a second chock on the corresponding other side of the cargo bed. The lashing belt 120, 120' is secured by means of tensioning from one or both sides of the corresponding chocks.

Fig 1b illustrates an embodiment of a system for securing cargo comprising three pieces of cargo A, B, C as seen from a front view of a cargo space having a cargo bed 400. The lashing belt 120 runs underneath the pieces of cargo A, B, C and secured through chocks 100, 100" at outwardly facing sides of the pieces of cargo A and C. The actual size of the pieces of cargo A, B, C may be smaller in the current embodiment than the size of the pieces of cargo A, B in an embodiment comprising fewer pieces of cargo.

The system also enables more than three pieces of cargo to be secured in a similar way.

In an embodiment with two or more pieces of cargo A, B, C, as seen in figs 1b, 1d and 1e, the cargo pieces may abut each other so as to provide support for each other. For example, as seen in fig 1b, only the pieces of cargo A and C having a side faced outwardly may abut at least a chock 100, 100" at an outwardly faced side. The piece of cargo B in the middle only abuts the outer pieces of cargo A, C and is thereby supported by these outer pieces of cargo A, C. Only as a temporary support, an auxiliary wedge (not illustrated) may be placed to hold a piece of cargo A, B in place, before loading a further piece of cargo B, C on a cargo bed 400. The auxiliary wedge(s) will be removed before final securing by tensioning the lashing belt 120 is performed.

Fig 1c illustrates an embodiment of a system for securing cargo comprising one piece of cargo A as seen from a front view of a cargo space having a cargo bed 400. The lashing belt 120 runs underneath the cargo A and secured through chocks 100, 100" at outwardly facing sides of the cargo A.

Fig 1d illustrates an embodiment of a system for securing cargo comprising two pieces of cargo A and B as seen from a front view of a cargo space having a cargo bed 400. The lashing belt 120 runs underneath the cargo A and B and secured through chocks 100, 100" at outwardly facing sides of the cargo A and B. The pieces of cargo A, B are supported by at least one chock from an outer side of each piece of cargo and by abutment against each other.

Fig 1e illustrates an embodiment of a system for securing cargo comprising two pieces of cargo A and B as seen from a front view of a cargo space having a cargo bed 400. The lashing belt 120 runs underneath the cargo A, B and secured through chocks 100, 100" at outwardly facing sides of the cargo A, B.

Additionally, as illustrated in fig 1e, an additional lasing belt 130 may be applied over the cargo A and fastened to a fixed point on the cargo bed 400. This additional lashing belt 130 may be applied to any one of the cargo systems illustrated in figs 1a-1e.

Hence, the cargo may further be secured by looping a an additional lashing belt 130 around the cargo A, B, and tensioning the lashing belt at one end of the cargo bed 400 or by using a lashing belt tensioning device (not illustrated).

The additional lashing belt 130 may be attached in the conventional manner to the cargo bed, or to an undercarriage supporting the cargo bed, on either sides of the piece(s) of cargo A, B, C.

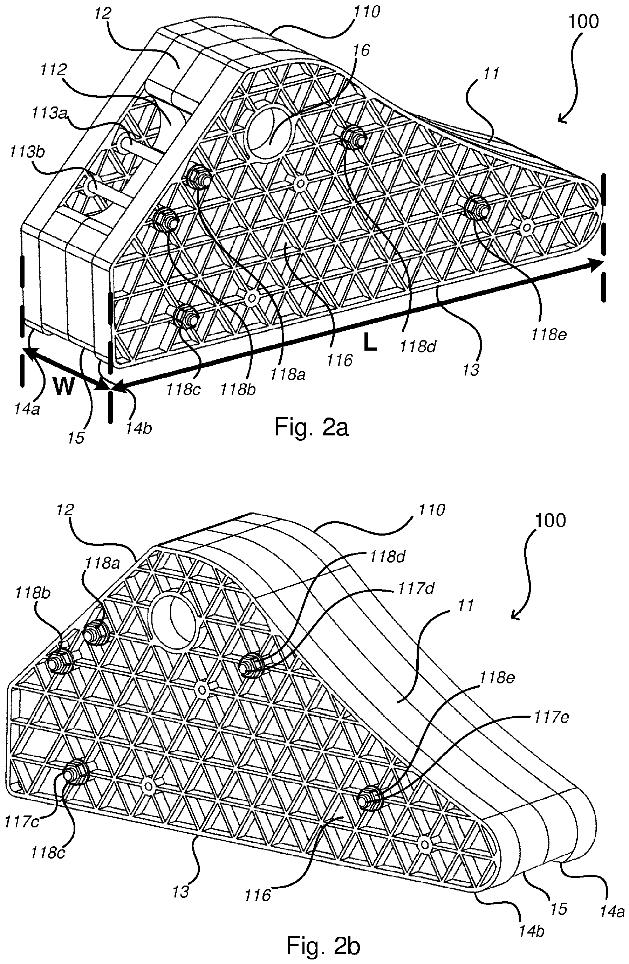

Figs 2a and 2b show the cargo chock 100 from a perspective view. The chock is sized and adapted for securing cargo, preferably cylindrical cargo. The chock 100 comprises a wedge body 110 wherein the wedge body 110 further comprises a concave load support face 11, a securing face 12 facing away from the load support face 11 and an elongate base support face 13. The elongate base support face 13 is formed on the downwardly facing part of the wedge body 110, and is thus typically horizontally oriented when the chock 100 is in use.

The curvature of the concave load support face 11 may be adapted to be approximately the same as the curvature of the piece of cargo that it is intended to support. For example, a bending radius of the concave load support face may deviate less than 10 %, preferably less than 5 % or less than 1 %, from a bending radius of the corresponding surface of the piece of cargo.

There is a recess 112 formed on the securing side 12, and at least one first lashing belt attachment device 113a is arranged in the recess 112.

The wedge body 110 has a length L along the longitudinal direction of the elongate base support face 13.

The wedge body 110 may further comprise a pair of side faces 116 at a distance W from each other, on either lateral side of the wedge body 110. The distance W defines the width of the wedge body perpendicularly to the length L. The wedge body also has a height H (not illustrated) extending perpendicularly from the elongate base support face 13 towards the highest point on the wedge body 110. The height may be measured at a point where the securing face 12 and the load support face meet on the wedge body 110.

As seen in fig 2a, the recess 112 may be formed in the slanted securing face 12. Instead of a recess 112, there may be, in a different embodiment, formed an extruding part from the securing face 12, wherein an attachment device 113a may be provided attached to the extruding part. The recess 112 is sized and adapted for receiving a lashing belt (the lashing belt 120 is further illustrated in figs 4a and 4b).

Further, there is a lashing belt attachment device 113a provided in the recess. The lashing belt attachment device 113a may be formed and adapted to receive and guide a lasing belt 120 (illustrated in figs 4a and 4b). In the illustrated embodiment, the lashing belt attachment device 113a is formed as a rod and extending along the width direction of the wedge body 110. The rod may extend through side faces 116 on both sides of the wedge body 110. In the current embodiment, a second belt attachment device 113b rod may be formed at the recess 112 on the securing face 12. The second lashing belt attachment device 113b may also be formed as a rod, which is sized and adapted to receive a lashing belt. Of course, the current embodiment och the chock 100 is not limited to having one or two lashing belt attachment devices and may comprise more than two lashing belt attachment devices 113a, 113b. The two lashing belt attachment devices 113a and 113b are arranged at a distance from each other, enough to allow a lashing belt to be looped around the lashing belt attachment devices 113a, 113b.

As illustrated in both figures 2a and 2b, the wedge body 110 may further comprise a groove 15 formed on the elongate base support face 13 and extending along the longitudinal direction L of the wedge body 110, creating two base surfaces 14a, 14b on each side of the groove 15. The groove 15 extends along the full length of the support face 13 and it may be open at both short sides of the wedge body 110. The groove 15 may be sized and adapted for allowing the lashing belt to pass therethrough unimpaired. That is, the groove 15 may have a width which is slightly wider than a width of the lashing belt and a height that is slightly greater than a thickness of the lashing belt.

The groove width may be approximately equal to a width of the recess and/or to a length of a rod forming a lashing belt attachment device 113a, 113b.

The two base surfaces 14a, 14b may be sized and adapted to provide sufficient balance for the wedge body 110, when in use.

The wedge body 110 may be formed of several pieces of material that are bolted together. In the embodiment as disclosed in figs 2a and 2b, the wedge body is formed of molded polymer material pieces having a thickness and profile, as seen from a side view, which are secured to keep together with bolts 117c, 117d, 117e and nuts 118c, 118d, 118e.

The lashing belt attachment devices 113a, and 113b may be secured with nuts 118a, 118b as well. The wedge body 110 may be formed from several structured pieces that are not compact, for weight and material saving purposes. In that case, there are air pockets formed in between the slices of material. the structure of the slices is formed in a way, that still provides a great durability and an ability to withstand forces from cargo, when assembled together in a wedge body, when in use. The structural slices may of course, be formed of a compact material.

The wedge body 110 may optionally also comprise a hole 16 extending in the width direction W through the wedge body 110. The hole 16 may be used for different purposes, for example for attaching a rope, a belt or a hook for additional securing purposes. The hole may also be used for receiving an alignment rod for aligning two or more chocks 100.

Figs 3a-3d show the chock 100 from different views. As already described above, the chock comprises a wedge body 110. In fig 3a, a schematic side view discloses a side profile of the chock 100. In the profile view, the concave load support face 11, a securing face 12 facing away from the load support face 11 and an elongate base support face 13 are seen. The profile view of the intersecting part between the load support face 11 and the elongate base support face 13 may be formed as a convex portion, which is different from the load support face which is formed as a concave part. The intersecting part between the load support face 11 and the elongate base support face 13 may in an embodiment as seen in fig 3a, be formed as a half circle having a radius. The intersecting part between the load support face 11 and the elongate base support face 13 may therefore be adapted for receiving a cylindrical cargo minimizing the risk for damage to cargo, when the cargo is arranged on the chock 100, for example. The feature of the intersecting part between the load support face 11 and the elongate base support face 13, being formed as a curved shape, and by eliminating sharp edges which are not desirable, provides safe loading of the cargo.

Fig 3b shows the chock 100 from a top view. A cross section A is marked on along the longitudinal direction of the wedge body and later illustrated from a side view in fig 3c.

Fig 3b further discloses marked up sections a, b, c and d. Fig 3b illustrates an embodiment of the chock wherein the wedge body 110 is comprised of sections of planar sheet material having the outline of the respective portion of the wedge body 110. In the illustrated embodiment, the sections placed on the outer sides a, and d, may have a smaller width than the middle sections b and c. In the embodiment, there are also bolts 117c, 117d, 117e and corresponding nuts 118c, 118d, 118e arranged to abut the side faces 116 and to secure the sections together laterally.

Fig 3c illustrates a cross sectional view of the chock 100 from a cross section A as illustrated in fig 3b. Only one base surface 14a is shown. The cross-sectional view discloses a cross-sectional surface 17 of the wedge body 110, wherein the section c of wedge body 110 comprises a solid, compact material. The sections a, b, c, d of the wedge body 110 may, in another embodiment also be formed of a non- compact material to minimize weight.

In one embodiment, some of the sections a, b, c, d may be formed of a non-compact material and some sections a, b, c, d may be formed of a compact material.

The recess 112 may be formed in the sections b and c, whereas the sections a and d may form securing side portions on each side, where the lashing belt attachment device or devices 113a, 113b may be attached. Also, a groove 15 is disclosed together with a base surface 14a.

Fig 3d shows the chock 100 as seen from a front view (a view as seen from the securing side of the chock). Both base surfaces 14a, 14b formed by the groove 15 on the elongate base support face 13 are disclosed.

Figs 4a and 4b disclose a kit 200 comprising at least a pair of chocks (only one chock is seen in the drawing) 100 and a lashing belt 120.

Fig 4a shows a cross sectional perspective view of the chock 100 with the lashing belt 120 interested into the lashing belt receiving recess 112, wherein the lashing belt runs in the groove 15 between the cargo bed (not illustrated) and the elongate base support face 13, then is guided into the recess 112 under both of the lashing belt attachment devices 113a, 113b formed as rods in the current embodiment. The lashing belt 120 is returned by looping around the first lashing belt attachment device 113a and returning the lash in the opposite direction back between the second lashing belt attachment device 113b and the lashing belt 120. Finally, the lashing belt 120 is secured by tensioning and kept securely in place by means of friction between the lashing belt and the lashing belt attachment device.

Fig 4b schematically illustrates the chock 100 when in use to secure a piece of cargo B on a horizontal cargo bed 400.

Fig 4b also illustrates the kit 200 as seen in fig 4a, together with at least one spacing device 210, which may be formed as an anti-slip mat.

Moreover, fig 4b also illustrates the chock 100 being arranged on a separate anti-slip mat 220, having a chock facing surface which is slightly greater than that of the supporting surface 13 of the chock 100.

The kit 200 is seen in use beneath a piece of cargo (shown partly). The friction anti-slip mat 220 may have a sufficient size so that the elongate base support face 13 is in full contact with the anti-slip mat 220.

In a practical example, each cargo chock 100 may have a width of about 8-10 cm. Typically, cargo reels are positioned about 20-30 cm from each end of a piece of cargo.

Each set of chocks may be used as follows.

Initially, a first cargo chock 100 is positioned on the cargo bed, and a lashing belt is attached to it by means of the lashing belt attachment device or devices 113a, 113b of the first cargo chock 100.

A first portion of the lashing belt is arranged to run downwardly at the securing face 12 of the chock 100 and below the chock in the groove 15, across the portion of the cargo bed where the piece of cargo is to be placed. The lashing belt lie flat and free of knots and twists.

Anti-slip mats 210 may then be placed on either side of the lashing belt, preferably without contacting the lashing belt. Such anti-slip mats may be about 5-7 mm thick.

The piece of cargo is then arranged on the anti-slip mats and in contact with the load support face 11 of the chock 100. Preferably, the load support face 11 should be form fit with the convex surface of the piece of cargo.

At this point, an auxiliary support wedge may be applied to prevent the piece of cargo from moving while the lashing is completed.

A second cargo chock is then positioned on the opposite side of the piece of cargo, relative to the first cargo chock.

The lashing belt is then brought through the groove 15 of the second cargo chock and attached to the lashing belt attachment device or devices 113a, 113b of the second cargo chock.

## Claims

1. A cargo system (300) comprising: a generally flat cargo bed (400), at least one piece of downwardly convex cargo (A, B), at least one lashing belt (120) sized and adapted for securing a piece of cargo (A, B) and at least two cargo chocks (100, 100");
wherein each of the cargo chocks comprises:
a wedge body (110) having:
a load support face (11),
a securing face (12) facing away from the load support face, and
an elongate base support face (13), which extends along a longitudinal direction of the wedge body,
wherein the securing face presents at least one lashing belt attachment device (113a, 113b);
wherein the cargo chock is freely arranged on the cargo bed,
wherein the piece of cargo is arranged to bear against the load support face (11) of the cargo chocks (100, 100'), and
wherein the lashing belt is connected to the lashing belt attachment device (113a, 113b) of a first one of the cargo chocks (100, 100'), extends below the at least one piece of cargo and is attached to a second one of the cargo chocks (100, 100') at an opposite side of the at least one piece of cargo, and
**characterized in that** said cargo system (300) further comprises at least one spacing device (210), preferably in the form of an anti-slip mat (210), arranged between the at least one piece of cargo and the cargo bed such that a gap is formed between cargo bed (400) and the piece of cargo (A, B) and that the lashing belt (120) extends through said gap.

2. The cargo system (300) according to claim 1, wherein the securing face presents at least one recess (112), in which the lashing belt attachment device (113a) is provided.

3. The cargo system (300) according to claim 1 or 2, wherein the lashing belt attachment device (113a) is formed as at least one rod, which extends substantially horizontally and perpendicular to the longitudinal direction.

4. The cargo system (300) according to any of the preceding claims, further comprising at least a second lashing belt attachment device (113b) and wherein the lashing belt attachment devices (113a, 113b) are spaced apart along the securing face (12) and extend parallel with each other.

5. The cargo system (300) according to any of the preceding claims wherein the wedge body (110) further comprises a groove (15) formed in the elongate base support face (13), said groove extending along the longitudinal direction of the wedge body (110) and being open at short sides of the elongate base support face (13).

6. The cargo system (300) according to any of the preceding claims, wherein the elongate base support face (13) is modified to present greater friction relative to a material from which the wedge body is manufactured and/or relative to at least one of the load support face (11) and the securing face (12).

7. The cargo system (300) according to any of the preceding claims, wherein a pair of spacing devices, preferably in the form of anti-slip mats (210), are arranged between the at least one piece of cargo and the cargo bed, on either side of the lashing belt, preferably without contacting the lashing belt

8. A method of securing a piece of cargo, which is downwardly convex, on a cargo bed, the method comprising:
providing at least two cargo chocks (100, 100"), each comprising:
a wedge body (110) having:
a load support face (11),
a securing face (12) facing away from the load support face, and
an elongate base support face (13), which extends along a longitudinal direction of the wedge body,
wherein the securing face presents at least one lashing belt attachment device (113a, 113b);
wherein the method further comprises:
arranging the piece of cargo on the cargo bed,
arranging the cargo chock so that the load support face (11) bears against the piece of cargo,
providing a lashing belt (120);
connecting the lashing belt to the lashing belt attachment device (113a, 113b),
causing the lashing belt to extend below the piece of cargo, and
securing the lashing belt at an opposite side of the piece of cargo from the first cargo chock (100) to a second cargo chock (100"),
**characterized by**
providing at least one spacing device,
arranging the spacing device between the cargo bed and the piece of cargo, such that a gap is formed between cargo bed and the piece of cargo, and
causing the lashing belt to extend through said gap.

9. The method as claimed in claim 8, further comprising providing an additional lashing belt (130) to extend above the piece of cargo and securing the additional lashing belt (130) to the cargo bed (400).

10. The method as claimed in claim 8 or 9, wherein the wedge body (110) comprises a groove (15) formed in the elongate base support face (13), extending along the longitudinal direction of the wedge body (110) and open at short sides of the elongate base support face (13), and
wherein the method further comprises causing the lasing belt to extend below the cargo chock (100) through said groove (15).

11. The method as claimed in any one of claims 8-10, wherein the lashing belt attachment device (113a, 113b) comprises an upper rod (113a) and a lower rod (113b), wherein the method further comprises causing the lashing belt to extend:
through a first deflection by the lower rod (113b), from an outside towards an inside of the lower rod (113b),
upwardly towards the upper rod (113a),
through a second deflection by the upper rod (113a), from an outside towards an inside of the upper rod (113a),
downwardly towards the lower rod (113b),
through a third deflection by the lower rod (113b), from an inside towards an outside of the lower rod (113b), and
downwardly to below the cargo chock (100).

12. The method as claimed in any one of claims 8-11, further comprising tensioning the lashing belt (120).

## Patentansprüche

1. Frachtsystem (300), umfassend: eine im Allgemeinen flache Ladefläche (400), mindestens ein Stück nach unten konvexer Fracht (A, B), mindestens einen Zurrgurt (120), der so bemessen und angepasst ist, dass er ein Frachtstück (A, B) sichert, und mindestens zwei Frachtkeile (100, 100");
wobei jeder der Frachtkeile umfasst:
einen Keilkörper (110) mit:
einer Laststützfläche (11),
einer von der Lastauflagefläche abgewandten Befestigungsfläche (12) und
einer länglichen Basisstützfläche (13), die sich entlang einer Längsrichtung des Keilkörpers erstreckt,
wobei die Befestigungsfläche mindestens eine Zurrgurtbefestigungsvorrichtung (113a, 113b) aufweist;
wobei der Frachtkeil frei auf der Ladefläche angeordnet ist,
wobei das Stück Ladung so angeordnet ist, dass es gegen die Laststützfläche (11) der Frachtkeile (100, 100') drückt, und
wobei der Zurrgurt mit der Zurrgurtbefestigung (113a, 113b) eines ersten der Frachtkeile (100, 100') verbunden ist, er sich unterhalb des mindestens einen Frachtstücks erstreckt und er an einem zweiten der Frachtkeilkeile (100, 100') an einer gegenüberliegenden Seite des mindestens einen Frachtstücks befestigt ist, und
**dadurch gekennzeichnet, dass** das Frachtsystem (300) ferner mindestens eine Abstandsvorrichtung (210), vorzugsweise in Form einer Antirutschmatte (210), umfasst, die zwischen dem mindestens einen Frachtstück und der Ladefläche angeordnet ist, so dass ein Spalt zwischen Ladefläche (400) und Frachtstück (A, B) gebildet wird und dass der Zurrgurt (120) sich durch diesen Spalt erstreckt.

2. Frachtsystem (300) nach Anspruch 1, wobei die Befestigungsfläche mindestens eine Aussparung (112) aufweist, in der die Zurrgurtbefestigungsvorrichtung (113a) vorgesehen ist.

3. Frachtsystem (300) nach Anspruch 1 oder 2, wobei die Zurrgurtbefestigungsvorrichtung (113a) als mindestens eine Stange ausgebildet ist, die sich im Wesentlichen horizontal und senkrecht zur Längsrichtung erstreckt.

4. Frachtsystem (300) nach einem der vorhergehenden Ansprüche, das ferner mindestens eine zweite Zurrgurtbefestigungsvorrichtung (113b) umfasst und wobei die Zurrgurtbefestigungsvorrichtungen (113a, 113b) entlang der Befestigungsfläche (12) voneinander beabstandet sind und parallel zueinander verlaufen.

5. Frachtsystem (300) nach einem der vorhergehenden Ansprüche, wobei der Keilkörper (110) ferner eine Nut (15) umfasst, die in der länglichen Basisstützfläche (13) ausgebildet ist, wobei die Nut entlang der Längsrichtung des Keilkörpers (110) verläuft und an kurzen Seiten der länglichen Basisstützfläche (13) offen ist.

6. Frachtsystem (300) nach einem der vorhergehenden Ansprüche, wobei die längliche Basisstützfläche (13) modifiziert ist, um eine größere Reibung relativ zu einem Material, aus dem der Keilkörper hergestellt ist, und/oder relativ zu mindestens einer der Laststützflächen (11) und der Befestigungsfläche (12) aufzuweisen.

7. Frachtsystem (300) nach einem der vorhergehenden Ansprüche, wobei ein Paar Abstandsvorrichtungen, vorzugsweise in Form von Antirutschmatten (210), zwischen dem mindestens einen Frachtstück und der Ladefläche auf beiden Seiten des Zurrgurts angeordnet sind, vorzugsweise ohne den Zurrgurt zu berühren.

8. Verfahren zum Sichern eines nach unten konvexen Frachtstücks auf einer Ladefläche, wobei das Verfahren umfasst:
Bereitstellen von mindestens zwei Frachtkeilen (100, 100"), die jeweils umfassen:
einen Keilkörper (110) mit:
einer Laststützfläche (11),
einer von der Laststützfläche abgewandten Befestigungsfläche (12) und
einer länglichen Basisstützfläche (13), die sich entlang einer Längsrichtung des Keilkörpers erstreckt,
wobei die Befestigungsfläche mindestens eine Zurrgurtbefestigungsvorrichtung (113a, 113b) aufweist;
wobei das Verfahren ferner umfasst:
Anordnen des Frachtstücks auf der Ladefläche,
Anordnen des Frachtkeils so, dass die Laststützfläche (11) am Frachtstück anliegt;
Bereitstellen eines Zurrgurtes (120);
Verbinden des Zurrgurts mit der Zurrgurtbefestigungsvorrichtung (113a, 113b),
Veranlassen, dass sich der Zurrgurt unter das Frachtstück erstreckt, und
Befestigen des Zurrgurts auf einer dem ersten Frachtkeil (100) gegenüberliegenden Frachtstück-Seite an einem zweiten Frachtkeil (100"),
**gekennzeichnet durch**
Bereitstellen von mindestens einer Abstandsvorrichtung,
Anordnen der Abstandsvorrichtung zwischen der Ladefläche und dem Frachtstück, so dass zwischen der Ladefläche und dem Frachtstück ein Spalt entsteht, und
Veranlassen des Zurrgurts, sich durch diesen Spalt zu erstrecken.

9. Verfahren nach Anspruch 8, ferner umfassend das Bereitstellen eines zusätzlichen Zurrgurts (130), der sich über das Frachtstück erstreckt, und Befestigen des zusätzlichen Zurrgurts (130) an der Ladefläche (400).

10. Verfahren nach Anspruch 8 oder 9, wobei der Keilkörper (110) eine Nut (15) umfasst, die in der länglichen Basisstützfläche (13) ausgebildet ist und sich entlang der Längsrichtung des Keilkörpers (110) erstreckt, und an kurzen Seiten der länglichen Basisstützfläche (13) offen ist, und
wobei das Verfahren ferner umfasst, den Zurrgurt sich unter dem Frachtkeil (100) durch die Nut (15) erstrecken zu lassen.

11. Verfahren nach einem der Ansprüche 8 bis 10, wobei die Zurrgurtbefestigungsvorrichtung (113a, 113b) eine obere Stange (113a) und eine untere Stange (113b) umfasst, wobei das Verfahren ferner umfasst zu veranlassen, dass sich der Zurrgurt erstreckt:
durch eine erste Ablenkung durch die untere Stange (113b), von einer Außenseite zu einer Innenseite der unteren Stange (113b),
nach oben zur oberen Stange (113a),
durch eine zweite Ablenkung durch die obere Stange (113a), von einer Außenseite zu einer Innenseite der oberen Stange (113a),
nach unten zur unteren Stange (113b),
durch eine dritte Ablenkung durch die untere Stange (113b), von einer Innenseite zu einer Außenseite der unteren Stange (113b) und
nach unten bis unter den Frachtkeil (100).

12. Verfahren nach einem der Ansprüche 8-11, weiterhin umfassend das Spannen des Zurrgurtes (120).

## Revendications

1. Système de chargement (300) comprenant : une plateforme de chargement (400) généralement plate, au moins un élément de chargement convexe vers le bas (A, B), au moins une sangle d'arrimage (120) dimensionnée et adaptée pour fixer un élément de chargement (A, B) et au moins deux cales de chargement (100, 100") ;
dans lequel chacune des cales de chargement comprend :
un corps de coin (110) comportant :
une face de support de charge (11),
une face de fixation (12) opposée à la face de support de charge, et
une face de support de base allongée (13), laquelle s'étend le long d'une direction longitudinale du corps de coin,
dans lequel la face de fixation présente au moins un dispositif d'attache de sangle d'arrimage (113a, 113b) ;
dans lequel la cale de chargement est disposée librement sur la plateforme de chargement,
dans lequel l'élément de chargement est agencé de manière à s'appuyer contre la face de support de charge (11) des cales de chargement (100, 100'), et
dans lequel la sangle d'arrimage est reliée au dispositif d'attache de sangle d'arrimage (113a, 113b) d'une première parmi les cales de chargement (100, 100'), s'étend sous l'au moins un élément de chargement et est attachée à une deuxième parmi les cales de chargement (100, 100') sur un côté opposé à l'au moins un élément de chargement, et
**caractérisé en ce que** ledit système de chargement (300) comprend en outre au moins un dispositif d'espacement (210), de préférence sous la forme d'un tapis antidérapant (210), disposé entre l'au moins un élément de chargement et la plateforme de chargement de telle façon qu'un espace est formé entre la plateforme de chargement (400) et l'élément de chargement (A, B) et que la sangle d'arrimage (120) s'étend à travers ledit espace.

2. Système de chargement (300) selon la revendication 1, dans lequel la face de fixation présente au moins une cavité (112) dans laquelle est installé le dispositif d'attache de sangle d'arrimage (113a).

3. Système de chargement (300) selon la revendication 1 ou 2, dans lequel le dispositif d'attache de sangle d'arrimage (113a) est formé sur une tige, laquelle s'étend substantiellement horizontalement et perpendiculairement à la direction longitudinale.

4. Système de chargement (300) selon l'une quelconque des revendications précédentes, comprenant en outre au moins un deuxième dispositif d'attache de sangle d'arrimage (113b) et dans lequel les dispositifs d'attache de sangle d'arrimage (113a, 113b) sont espacés le long de la face de fixation (12) et s'étendent parallèlement l'un à l'autre.

5. Système de chargement (300) selon l'une quelconque des revendications précédentes, dans lequel le corps de coin (110) comprend en outre une rainure (15) formée dans la face de support de base allongée (13), ladite rainure s'étendant le long de la direction longitudinale du corps de coin (110) et étant ouverte sur des côtés courts de la face de support de base allongée (13).

6. Système de chargement (300) selon l'une quelconque des revendications précédentes, dans lequel la face de support de base allongée (13) est modifiée pour présentent une friction plus élevée par rapport à un matériau constituant le corps de coin et/ou par rapport à l'une au moins parmi la face de support de charge (11) et la face de fixation (12).

7. Système de chargement (300) selon l'une quelconque des revendications précédentes, dans lequel une paire de dispositifs d'espacement, de préférence sous la forme de tapis antidérapants (210), sont disposés entre l'au moins un élément de chargement et la plateforme de chargement, de chaque côté de la sangle d'arrimage, de préférence sans toucher la sangle d'arrimage.

8. Procédé de fixation d'un élément de chargement, lequel est convexe vers le bas, sur une plateforme de chargement, le procédé comprenant :
la mise à disposition d'au moins deux cales de chargement (100, 100") comprenant respectivement :
un corps de coin (110) comportant :
une face de support de charge (11),
une face de fixation (12) opposée à la face de support de charge, et
une face de support de base allongée (13), laquelle s'étend le long d'une direction longitudinale du corps de coin,
dans lequel la face de fixation présente au moins un dispositif d'attache de sangle d'arrimage (113a, 113b) ;
dans lequel le procédé comprend en outre :
l'arrangement de la cale de chargement sur la plateforme de chargement,
l'arrangement de la cale de chargement de telle façon que la face de support de charge (11) s'appuie contre l'élément de chargement,
la mise à disposition d'une sangle d'arrimage (120) ;
le raccordement de la sangle d'arrimage au dispositif d'attache de sangle d'arrimage (113a, 113b),
la mise en place de la sangle d'arrimage de manière à ce que celle-ci s'étende sous l'élément de chargement, et
la fixation de la sangle d'arrimage sur un côté opposé de l'élément de chargement, d'une première cale de chargement (100) vers une deuxième cale de chargement (100"),
**caractérisé par**
la mise à disposition d'au moins un dispositif d'espacement,
l'arrangement du dispositif d'espacement entre la plateforme de chargement et l'élément de chargement, de telle façon qu'un espace est formé entre la plateforme de chargement et l'élément de chargement, et
la mise en place de la sangle d'arrimage de manière à ce que celle-ci s'étende à travers ledit espace.

9. Procédé selon la revendication 8, comprenant en outre la mise à disposition d'un sangle d'arrimage supplémentaire (130) de manière à ce que celle-ci s'étende au-dessus de l'élément de chargement et la fixation de la sangle d'arrimage supplémentaire (130) à la plateforme de chargement (400).

10. Procédé selon la revendication 8 ou 9, dans lequel le corps de coin (110) comprend une rainure (15) formée dans la face de support de base allongée (13), s'étendant le long de la direction longitudinale du corps de coin (110) et ouverte sur des côtés courts de la face de support de base allongée (13), et
dans lequel le procédé comprend en outre la mise en place de la sangle d'arrimage de manière à ce que celle-ci s'étende sous la cale de chargement (100) à travers ladite rainure (15).

11. Procédé selon l'une quelconque des revendications 8 à 10, dans lequel le dispositif d'attache de sangle d'arrimage (113a, 113b) comprend une tige supérieure (113a) et une tige inférieure (113b), dans lequel le procédé comprend en outre la mise en place de la sangle d'arrimage de manière à ce que celle-ci s'étende :
par le biais d'une première déflexion par la tige inférieure (113b), à partir d'un extérieur vers un intérieur de la tige inférieure (113b),
vers le haut en direction de la tige supérieure (113a),
par le biais d'une deuxième déflexion par la tige supérieure (113a), à partir d'un extérieur vers un intérieur de la tige supérieure (113a),
vers le bas en direction de la tige inférieure (113b),
par le biais d'une troisième déflexion par la tige inférieure (113b), à partir d'un intérieur vers un extérieur de la tige inférieure (113b), et
vers le bas jusque sous la cale de chargement (100).

12. Procédé selon l'une quelconque des revendications 8 à 11,
comprenant en outre la mise en tension de la sangle d'arrimage (120).
